# EUROPEAN PATENT APPLICATION

(11) **EP 4 618 384 A1**
(43) Date of publication of application: **17.09.2025**
(21) Application number: 23930009.8
(22) Date of filing: 28.11.2023
(51) Int. Cl.: H02K 33/18, H04N 23/67

(54) **CAMERA DRIVING MOTOR, CAMERA MODULE, AND ELECTRONIC DEVICE**

(30) Priority: 24.03.2023 CN 202310329994
(71) Applicant: Huawei Technologies Co., Ltd., Shenzhen, Guangdong 518129 (CN)
(72) Inventor: JIANG, Hong, Shenzhen, Guangdong 518129 (CN); WU, Yushun, Shenzhen, Guangdong 518129 (CN)
(74) Representative: Goddar, Heinz J.
(86) International application number: PCT/CN2023/134724
(87) International publication number: WO 2024/198442

(57) **Abstract**

Embodiments of this application provide a camera driving motor, a camera module, and an electronic device, and relate to the field of electronic device camera technologies. A driving motor that can increase a focusing speed and improve focusing stability is provided. The camera driving motor includes a base, a carrier, and a focusing structure. The focusing structure connects the carrier and the base. The focusing structure includes a first coil and a first magnet. The first coil is of an annular structure. One of the first coil and the first magnet is fastened to the base, and the other is fastened to the carrier. The first coil surrounds a circumference of the base or the carrier. The camera driving motor further includes a guide axis. An axial direction of the guide axis is consistent with a direction of an optical axis of a lens, and the guide axis is fastened relative to the base. The carrier is slidably connected to the guide axis, and the carrier has a first surface and a second surface that slidably fit with the guide axis. When the focusing structure drives the carrier to move relative to the base along the optical axis of the lens, the guide axis is in contact with the first surface and the second surface, and the carrier slides in the axial direction of the guide axis, to implement focusing.

## Description

This application claims priority to Chinese Patent Application No. 202310329994.0, filed with the China National Intellectual Property Administration on March 24, 2023 and entitled "CAMERA DRIVING MOTOR, CAMERA MODULE, AND ELECTRONIC DEVICE", which is incorporated herein by reference in its entirety.

### TECHNICAL FIELD

This application relates to the field of electronic device camera technologies, and in particular, to a camera driving motor, a camera module having the camera driving motor, and an electronic device including the camera module.

### BACKGROUND

In some electronic devices having a camera function, a driving motor is integrated into a camera module. The driving motor is configured to drive a lens to move, to implement automatic focusing (automatic focusing, AF) and/or optical image stabilization (optical image stabilization, OIS), so as to ensure shooting clarity of the electronic device.

With an increasing requirement for use, an automatic focusing speed more needs to be increased, and therefore an automatic focusing running speed and other performance of the driving motor urgently need to be increased. In addition, a larger image sensor and a larger lens are to be used in a future camera module. When a conventional driving motor solution is used to enable the lens to focus, the lens is prone to tilt. In other words, an existing driving motor cannot effectively balance stability of automatic focusing and a focusing speed of the lens. Therefore, a new-architecture automatic focusing motor that meets the foregoing two performance requirements is urgently required.

### SUMMARY

This application provides a camera driving motor, a camera module having the camera driving motor, and an electronic device including the camera module. A coil of an annular structure is introduced into the camera driving motor, so that an effective output force on a lens can be increased, to increase a focusing speed of the lens. In addition, because a carrier carrying the lens slides along a guide axis during focusing, even if the effective output force is large, a moving tilt amplitude of the lens can be alleviated, to improve stability of moving focusing.

To achieve the foregoing objectives, the following technical solutions are used in embodiments of this application.

According to an aspect, this application provides a camera driving motor. For example, the camera driving motor may be applied to an electronic device having a photographing function and a video recording function.

The camera driving motor includes a base, a carrier, and a focusing structure. The carrier is configured to mount a lens. The focusing structure connects the carrier and the base. The focusing structure includes a first coil and a magnet assembly. The magnet assembly includes a plurality of first magnets. The first coil is of an annular structure. One of the first coil and the magnet assembly is fastened to the base, and the other is fastened to the carrier. The first coil surrounds a circumference of one of the base and the carrier, and the plurality of first magnets are distributed around a circumference of the other of the base and the carrier. In addition, the camera driving motor further includes a first guide axis. An axial direction of the first guide axis is consistent with a direction of an optical axis of the lens, and the first guide axis is fastened relative to the base. The carrier is slidably connected to the first guide axis, and the carrier has a first surface and a second surface that slidably fit with the first guide axis. When the focusing structure drives the carrier to move relative to the base along the optical axis of the lens, the carrier slides in the axial direction of the first guide axis, and the first guide axis is in contact with (or abuts against) the first surface and the second surface.

In the camera driving motor provided in this application, a coil in the focusing structure is a coil of an annular structure, the annular coil is continuously disposed around a circumference of one of the base and the carrier, and the first magnet is disposed around a circumference of the other of the base and the carrier. In this way, an Ampere's force acting on the carrier is basically evenly distributed along a circumference of the carrier. Compared with some technologies in which a racetrack coil is disposed at a partial position of the base (for example, on one side of the base), this application can significantly increase an effective Ampere's force (which may also be referred to as an effective output force). Therefore, during automatic focusing of the lens, a focusing speed of the lens can be significantly increased. In addition, because the carrier slidably fits with the base through the first guide axis, and the first guide axis abuts against the first surface and the second surface, even if the effective output force is large, in a fast focusing process of the lens, the first guide axis abuts against the first surface and the second surface, and slides along the first surface and the second surface. In this case, movement stability is high, and there is basically no phenomenon that the carrier deviates from the optical axis due to the large effective output force.

In a possible implementation, the camera driving motor further includes an attraction structure, and the attraction structure is configured to generate an attractive force between the carrier and the base and/or between the carrier and the first guide axis; and when the focusing structure drives the carrier to move relative to the base along the optical axis of the lens, the carrier slides in the axial direction of the first guide axis under attraction of the attractive force.

When the carrier carrying the lens moves relative to the base in the direction of the optical axis of the lens, to enable the carrier to stably slide along the first guide axis, in this implementation, the attraction structure is disposed. The attraction structure may generate an attractive force between the carrier and the base, and/or may generate an attractive force between the carrier and the first guide axis. Under action of the attractive force, the carrier slides along the first guide axis.

In a possible implementation, the attractive force includes a force perpendicular to the first surface.

Because the attractive force includes a force perpendicular to a sliding abutting surface between the first guide axis and the carrier, under action of the force, a contact force between the first guide axis and the first surface is increased, thereby further improving sliding stability.

In a possible implementation, the attraction structure includes a second magnet, the second magnet is fastened relative to the carrier, and is disposed close to the first guide axis, and the attractive force is generated between the second magnet and the first guide axis.

When the carrier carrying the lens moves relative to the base in the direction of the optical axis of the lens, to enable the carrier to stably slide along the first guide axis, in this embodiment of this application, the second magnet is disposed, so that the attractive force (which may be referred to as an axis holding force) is generated between the second magnet and the first guide axis. In this way, in a moving process, the carrier can hold the first guide axis tightly and stably slide along the first guide axis, to improve movement stability.

In a possible implementation, the attraction structure further includes an electromagnetic shielding body, the electromagnetic shielding body is disposed on the carrier, there is placement space in the electromagnetic shielding body, the second magnet is located in the placement space, and a side surface that is of the electromagnetic shielding body and that faces the first guide axis is open, so that the attractive force is generated between the second magnet and the first guide axis.

The second magnet is disposed in the electromagnetic shielding body, and the side surface that is of the shielding body and that faces the first guide axis is open. In this way, external electromagnetic interference can be shielded while the first guide axis can be held tightly, for example, electromagnetic interference between the first coil and the second magnet can be shielded.

In a possible implementation, a side surface that is of the electromagnetic shielding body and that faces each of the first surface and the second surface is open.

The side surface that is of the electromagnetic shielding body and that faces each of the first surface and the second surface is open, to ensure a magnetic attractive force between the first guide axis and the second magnet.

In a possible implementation, there is a limiting boss on a side that is of the carrier and that faces a light entrance end of the lens, and when the focusing structure drives the carrier to move relative to the base along the optical axis of the lens, the limiting boss is configured to limit a movement position of the carrier; the first guide axis penetrates through the carrier and the limiting boss; and there is a mounting cavity at a position that is of the limiting boss and that is located on a side of the first guide axis, and the second magnet is disposed in the mounting cavity.

The first guide axis passes through the limiting boss, so that a contact area between the first guide axis and each of the carrier and the limiting boss can be increased, to improve movement stability.

In a possible implementation, there is a mounting cavity at a position that is of the carrier and that is located on a side of the first guide axis, and the second magnet is disposed in the mounting cavity through a bonding layer.

For example, the second magnet may be disposed in the electromagnetic shielding body, and then the electromagnetic shielding body assembled with the second magnet may be bonded in the mounting cavity through the bonding layer.

In a possible implementation, a first guide groove is disposed on the carrier, an extension direction of the first guide groove is consistent with the direction of the optical axis of the lens, the first guide axis is slidably disposed in the first guide groove, the first surface and the second surface are inner wall surfaces of the first guide groove, and the first surface and the second surface intersect.

In this embodiment, the first guide groove is disposed on the carrier, and sliding of the carrier relative to the base is implemented through sliding fitting between the guide axis and the guide groove.

In a possible implementation, the first guide groove is filled with a lubrication structure.

For example, the first guide groove may be filled with lubricant, or a film layer structure with a small friction coefficient may be formed on an inner side surface of the first guide groove.

In a possible implementation, the camera driving motor further includes a second guide axis; and the first guide axis and the second guide axis are symmetrically disposed with respect to the optical axis of the lens.

The first guide axis and the second guide axis are symmetrically disposed with respect to the optical axis of the lens, so that the axis holding force can be symmetrical, to improve movement stability of the carrier.

In a possible implementation, the camera driving motor further includes a second guide groove; the second guide groove is slidably disposed in the second guide groove; and the second guide groove has a third surface and a fourth surface that intersect, and when the focusing structure drives the carrier to move relative to the base along the optical axis of the lens, the second guide axis is in contact with the third surface, and there is a gap between the second guide axis and the fourth surface.

For the first guide axis and the second guide axis that are disposed at different positions, because the first guide axis abuts against two adjacent inner side surfaces, when the carrier moves relative to the base, a movement position can be accurately controlled, to achieve a positioning function. In addition, because the second guide axis abuts against one of two adjacent side surfaces and has a gap with the other, an assembly tolerance function is achieved. In this way, assembly process difficulty is reduced in an assembly process.

In a possible implementation, the camera driving motor further includes a plurality of second coils, the plurality of second coils are disposed one-to-one with the plurality of first magnets, each of the second coils and a corresponding first magnet are arranged in a direction consistent with the direction of the optical axis of the lens, and the plurality of second coils and the plurality of first magnets are configured to drive the base and the carrier to tilt in any direction around.

Automatic focusing is implemented through electromagnetic induction between the first coil and the first magnet, and optical image stabilization is implemented through electromagnetic induction between the second coil and the first magnet, that is, automatic focusing and optical image stabilization share the first magnet. In this way, a quantity of structural members in the driving motor structure can be reduced, and a volume of the driving motor can be compressed.

In a possible implementation, the first magnet has a first part facing the first coil and a second part that faces away from the first coil and that is opposite to the first surface, the first part and the second part are magnetically opposite, and a direction from the first part to the second part is a first direction; and the second coil is a racetrack coil, and the second coil is parallel to the first direction.

That is, the shared first magnet provided in this embodiment of this application is a single-sided single-pole lodestone.

In a possible implementation, the camera driving motor further includes an electrical connection structure, the electrical connection structure is a flexible structure, a part of the electrical connection structure is electrically connected to the first coil, another part is electrically connected to a circuit board of the camera driving motor, and the circuit board supplies power to the first coil through the electrical connection structure.

In this embodiment of this application, the carrier slides along the guide axis to implement relative movement with the base, so as to implement focusing, and also slides along the guide axis to implement resetting. In this example, the coil and the circuit board are electrically connected through the electrical connection structure having a conductive function, to supply power to the coil.

In some technologies, the carrier and the base are connected through an elastic component (for example, a spring), and the spring has a supporting function of supporting the carrier on the base, and further has a resetting function. However, in a case of a large lens or image sensor, under action of the elastic component, stability of movement of the carrier relative to the base is significantly reduced. Based on this, use of sliding along the guide axis and the separate electrical connection structure is provided in this application, and for a large lens or image sensor, stability and reliability of movement of the carrier and the lens can be significantly improved.

In a possible implementation, the electrical connection structure is an elastic component, the elastic component is K, and K≤10 N/m.

Compared with an existing technology in which an elastic component with a stiffness coefficient of K is used, this application uses an elastic component with a small stiffness coefficient is used as the electrical connection structure. Because the elastic component is used only as the electrical connection structure, and is not used as an elastic support component for connecting the carrier and the base, an elastic material with a small stiffness coefficient may be selected. In this way, resistance to relative movement between the carrier and the base is not increased.

In a possible implementation, in the direction of the optical axis of the lens, the base has a first side close to a light entrance side of the lens and a second side away from the light entrance side of the lens; the circuit board includes a first sub-circuit board and a second sub-circuit board, the first sub-circuit board is located on the first side, and the second sub-circuit board is located on the second side; and the first sub-circuit board and the second sub-circuit board are electrically connected through a part of the electrical connection structure, and the first circuit board and the first coil are electrically connected through another part of the electrical connection structure.

In some examples, the second sub-circuit board may need to be electrically connected to a controller or a power supply unit that is disposed outside the camera motor, and the first sub-circuit board may need to carry some electronic components. In this case, the first sub-circuit board and the second sub-circuit board are electrically connected through a part of the electrical connection structure, and the first sub-circuit board and the first coil are electrically connected through another part of the electrical connection structure. Therefore, the first sub-circuit board, the second sub-circuit board, and the electrical connection structure can be used to supply power to the first coil.

In a possible implementation, the first sub-circuit board is fastened to the base; the electrical connection structure includes a first part, a second part, and a third part; the second sub-circuit board is connected to the first sub-circuit board through the first part; the first sub-circuit board is connected to the carrier through the second part; and the first coil is connected to the second part on the carrier through the third part.

In a possible implementation, the camera driving motor further includes a position detection unit, the position detection unit is configured to detect a position at which the carrier slides relative to the first guide axis, and the position sensor is disposed on the first sub-circuit board.

A sliding position of the carrier is detected by using the position detection unit, to determine a focusing position.

In a possible implementation, the base forms an accommodation cavity, the carrier is located in the accommodation cavity, and the carrier has a lens mounting hole configured to mount the lens; there is a first mounting groove on a wall surface that is of the carrier and that faces the base, the first mounting groove surrounds the circumference of the carrier, and the first coil is disposed in the first mounting groove; and there is a second mounting groove on a wall surface that is of the base and that faces the carrier, and the first magnet is disposed in the second mounting groove.

According to another aspect, this application further provides a camera module. The camera module includes a lens and the camera driving motor in any one of the foregoing implementations, and the lens is mounted on the carrier.

The camera module provided in this embodiment of this application includes the foregoing camera driving motor. During automatic focusing of the lens, a focusing output force on the lens can be increased under action of an annular coil and a first magnet, to implement fast focusing of the lens. In addition, in a focusing process of the lens, the carrier carrying the lens slides along a guide axis and abuts against a first surface and a second surface. In this way, even if the output force is large and a focusing movement speed is high, there is basically no tilt phenomenon, thereby improving focusing stability. According to still another aspect, this application further provides an electronic device, including a camera module and the computing control unit in any one of the foregoing implementations. The computing control unit is electrically connected to the camera module.

The electronic device provided in this embodiment of this application includes the foregoing camera module. Therefore, the electronic device provided in this embodiment of this application and the camera module in the foregoing technical solution can resolve a same technical problem and achieve same expected effects.

### BRIEF DESCRIPTION OF DRAWINGS

FIG. 1 is a three-dimensional view of an electronic device according to some embodiments of this application;
FIG. 2 is an exploded view of the electronic device shown in FIG. 1;
FIG. 3 is an internal circuit diagram of the electronic device shown in FIG. 1 and FIG. 2;
FIG. 4 is a three-dimensional view of a camera module according to some embodiments of this application;
FIG. 5 is an exploded view of the camera module shown in FIG. 4;
FIG. 6 is a three-dimensional view of a camera driving motor in the camera module shown in FIG. 4 and FIG. 5;
FIG. 7 is a three-dimensional view of a camera driving motor in a camera driving motor according to an embodiment of this application;
FIG. 8 is an exploded view of the camera driving motor shown in FIG. 7;
FIG. 9 is an exploded view of the camera driving motor shown in FIG. 7;
FIG. 10 is a three-dimensional view of assembly of a carrier and a first coil in a camera driving motor according to an embodiment of this application;
FIG. 11 is a three-dimensional view of assembly of a base and a first magnet in a camera driving motor according to an embodiment of this application;
FIG. 12 is an exploded view of the carrier and the first coil in FIG. 10;
FIG. 13 is an exploded view of the base and the first magnet in FIG. 11;
FIG. 14A is a three-dimensional view of structures of a first coil and a first magnet according to an embodiment of this application;
FIG. 14B is another three-dimensional view of structures of a first coil and a first magnet according to an embodiment of this application;
FIG. 15 is a three-dimensional view of assembly of a carrier and a guide axis according to an embodiment of this application;
FIG. 16 is an exploded view of the carrier and the guide axis in FIG. 15;
FIG. 17 is an exploded view of a connection relationship between a carrier and a base in a conventional technology;
FIG. 18 is a top view of assembly of a carrier and a guide axis according to an embodiment of this application;
FIG. 19 is an enlarged view at A in FIG. 18;
FIG. 20 is an enlarged view at B in FIG. 18;
FIG. 21 is a top view of assembly of a carrier and a guide axis according to an embodiment of this application;
FIG. 22 is a three-dimensional view of assembly of a carrier, a guide axis, and an attraction structure according to an embodiment of this application;
FIG. 23 is an exploded view of the carrier, the guide axis, and the attraction structure in FIG. 22;
FIG. 24 is an exploded view of the attraction structure in FIG. 22;
FIG. 25 is a diagram of an assembly relationship between a guide axis and an attraction structure according to an embodiment of this application;
FIG. 26 is a three-dimensional view of a carrier according to an embodiment of this application;
FIG. 27 is an exploded view of a carrier, a first magnet, and a second coil according to an embodiment of this application;
FIG. 28 is a three-dimensional view of a camera driving motor according to an embodiment of this application;
FIG. 29 is an exploded view of the camera driving motor shown in FIG. 28;
FIG. 30 is an exploded view of the camera driving motor shown in FIG. 28;
FIG. 31 is a three-dimensional view of a base according to an embodiment of this application;
FIG. 32 is a three-dimensional view of a first sub-circuit board according to an embodiment of this application;
FIG. 33 is a three-dimensional view of an electrical connection structure according to an embodiment of this application;
FIG. 34 is a three-dimensional view of a carrier according to an embodiment of this application;
FIG. 35 is a three-dimensional view of a first sub-circuit board according to an embodiment of this application;
FIG. 36 is an exploded view of a carrier and a first sub-circuit board according to an embodiment of this application;
FIG. 37 is an exploded view of a position detection unit in FIG. 36; and
FIG. 38 is a three-dimensional view of a base according to an embodiment of this application.

### Reference numerals:

10: Housing; 11: Frame; 12: Rear cover;
20: Camera decorative cover; 21: Light transmission window;
30: Camera module; 31: Lens; 31a: Light entrance end; 31b: Light exit end; 32: Camera driving motor; 321: Casing; 321a: First opening;
40: Main board;
50: Mounting opening;
100: Base; 101: Accommodation cavity; 102: Second mounting groove; 103: Fastening portion; 104: First fastening post;
200: Carrier; 201: Lens mounting hole; 202: First mounting groove; 203: Mounting cavity; 204: Limiting boss; 205: Second fastening post;
300: Focusing structure; 3000: Magnet assembly; 301: First coil; 302: First magnet; 302a: First part; 302b: Second part;
400, 401, and 402: Guide axis;
500, 501, and 502: Guide groove;
600: Attraction structure; 601: Second magnet; 602: Electromagnetic shielding body; 603: Bonding layer;
700: Second coil;
800: Electrical connection structure; 800a: First part; 800b: Second part; 800c: Third part; 800d: Fourth part;
801: First fastening end; 802: Second fastening end;
901: First sub-circuit board; 901a: Mounting hole; 901b: Bent portion;
902: Second sub-circuit board;
1000: Position detection unit;
1010: Detection magnet;
1020: Electromagnetic shielding structure;
1030: Elastic buffer component; and
1040: Elastic component.

### DESCRIPTION OF EMBODIMENTS

An embodiment of this application provides an electronic device. The electronic device is a type of electronic device having a shooting function. Specifically, the electronic device may be a portable electronic apparatus or another proper electronic apparatus. For example, the electronic device may be a mobile phone, a tablet computer, a personal computer, a wearable device, a photographic camera, or a video camera.

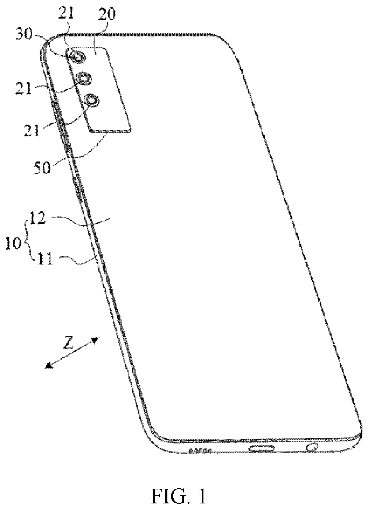

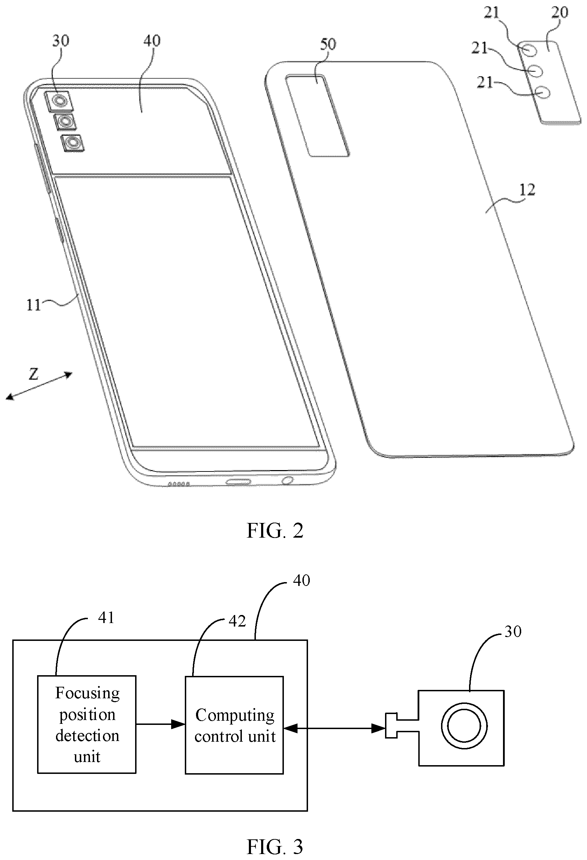

FIG. 1 is a three-dimensional view of an electronic device according to some embodiments of this application, and FIG. 2 is an exploded view of the electronic device shown in FIG. 1. In this embodiment, an example in which the electronic device is a mobile phone is used. The electronic device includes a housing 10, a camera decorative cover 20, a camera module 30, and a main board 40.

The housing 10 is a housing structure formed by splicing a front cover plate (not shown in the figure), a frame 11, and a rear cover 12, and is configured to protect an internal electronic component and circuit of the electronic device.

A mounting opening 50 is disposed on the rear cover 12, the camera decorative cover 20 covers the mounting opening 50, and the camera decorative cover 20 is configured to protect a rear-facing camera module of the electronic device. In some embodiments, the camera decorative cover 20 protrudes to the outside of the housing 10. In this way, the camera decorative cover 20 can increase mounting space of the rear-facing camera module in the electronic device in a thickness direction (that is, a direction Z) of the electronic device.

It may be understood that the camera decorative cover 20 may not protrude to the outside of the housing 10. At least one light transmission window 21 is disposed on the camera decorative cover 20, and the at least one light transmission window 21 is configured to allow scene light to be emitted into the rear-facing camera module.

The camera module 30 is disposed in the housing 10, the camera module 30 is configured to shoot a photo and a video, and the camera module has functions of automatic focusing and optical image stabilization.

In the electronic device, there may be one or more camera modules 30. When there is one camera module 30, the camera module 30 may be used as a front-facing camera module, or may be used as a primary rear-facing camera module or a secondary rear-facing camera module. The secondary rear-facing camera module includes but is not limited to a wide-angle camera module, a long-focus camera module, and the like. This is not specifically limited herein. When there are a plurality of camera modules 30, the plurality of camera modules 30 may be respectively used as a plurality of modules in a front-facing camera module, a primary rear-facing camera module, and a secondary rear-facing camera module. FIG. 1 and FIG. 2 merely show an example in which there is one camera module 30 and the camera module 30 is used as a primary rear-facing camera module. This cannot be considered as a special limitation on this application.

FIG. 3 is an internal circuit diagram of the electronic device shown in FIG. 1 and FIG. 2. In this embodiment of this application, the electronic device further includes a focusing position detection unit 41 and a computing control unit 42. In some embodiments, the focusing position detection unit 41 and the computing control unit 42 may be disposed on the main board 40. Certainly, the focusing position detection unit 41 and the computing control unit 42 may alternatively be disposed on another structure in the electronic device, for example, disposed on a circuit board on which a universal serial bus (universal serial bus, USB) component is located. FIG. 3 merely shows an example in which the focusing position detection unit 41 and the computing control unit 42 are disposed on the main board 40. This cannot be considered as a special limitation on this application.

The focusing position detection unit 41 is configured to detect a lens position during focusing of the electronic device. In some embodiments, the computing control unit 42 is a microprocessor. The computing control unit 42 is configured to receive and process an electrical signal that is from the camera module 30 and that includes image information. The computing control unit 42 is further configured to: compute a lens movement amount based on the lens position during focusing, and control and drive, based on the lens movement amount, a lens 31 of the camera module 30 to move, to implement an automatic focusing operation.

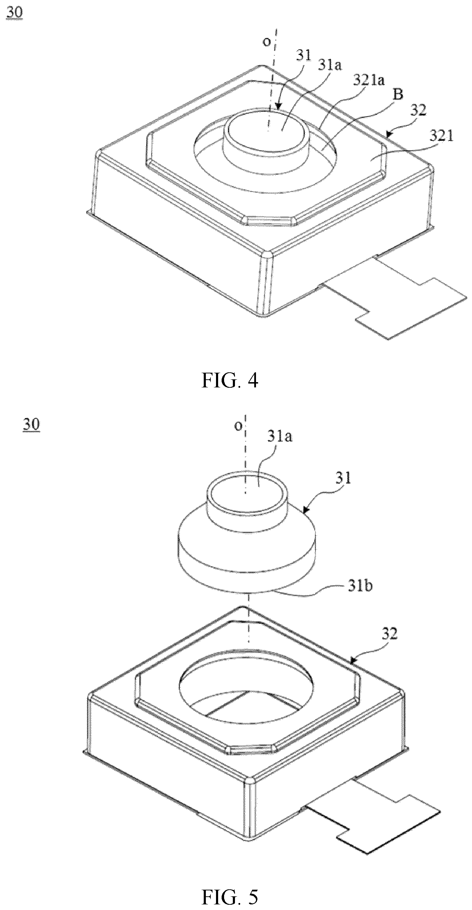

FIG. 4 is a three-dimensional view of a camera module 30 according to some embodiments of this application, and FIG. 5 is an exploded view of the camera module 30 shown in FIG. 4. In this embodiment, the camera module 30 includes a lens 31 and a camera driving motor 32.

The lens 31 is an upright lens, that is, an optical axis o of the lens 31 extends along a straight line. Generally, the lens 31 includes a lens barrel and an optical element group mounted in the lens barrel. The optical element group is configured to: transmit scene light, and image a photographed scene. By designing structural composition of the optical element group and a shape and size of an optical element, lenses having different features such as a wide angle and a long focus may be obtained. By replacing different lenses on the camera driving motor 32, camera modules having different features such as a wide angle and a long focus may be assembled.

The lens 31 includes a light entrance end 31a and a light exit end 31b. The light entrance end 31a of the lens 31 is an end that faces the photographed scene when the lens 31 is used, and the scene light is emitted into the lens 31 through the light entrance end 31a. The light exit end 31b of the lens 31 is an end that faces away from the photographed scene when the lens 31 is used, and the scene light is emitted from the lens 31 through the light exit end 31b.

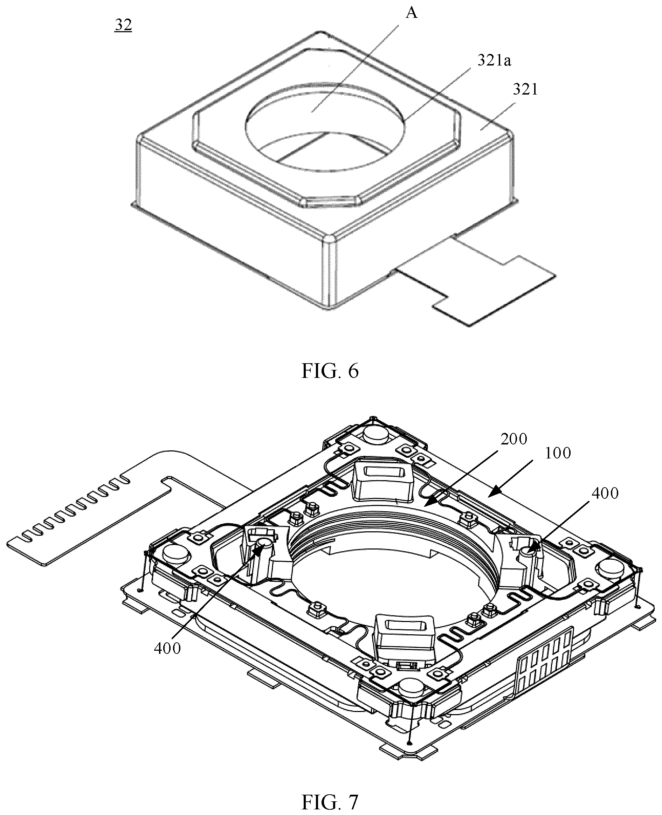

FIG. 6 is a three-dimensional view of the camera driving motor 32 in the camera module 30 shown in FIG. 4 and FIG. 5. In this embodiment, the camera driving motor 32 includes a casing 321, and the casing 321 is configured to protect an internal component and circuit of the camera driving motor 32 from water and dust. When the electronic device is assembled, the camera driving motor 32 is fastened to the electronic device through the casing 321.

An assembly cavity A is disposed in the casing 321, and a first opening 321a communicating with the assembly cavity A is disposed on the casing 321. A shape of the first opening 321a includes but is not limited to a circle, a square, an ellipse, and a polygon.

The first opening 321a is configured to accommodate the light entrance end 31a of the lens 31 when the lens 31 is mounted in the camera driving motor 32 (still refer to FIG. 4). When the lens 31 is mounted in the camera driving motor 32, still with reference to FIG. 4, a specific avoidance gap B is maintained between a circumference of a casing edge at the first opening 321a and the light entrance end 31a of the lens 31, to avoid the lens 31 when the lens tilts and moves in any direction around.

The camera driving motor 32 further includes an image sensor, a circuit board, and the like that are located in the assembly cavity A shown in FIG. 6. The camera driving motor may be configured to drive the lens 31 to move along the optical axis o of the lens 31, to implement automatic focusing of the lens; or may be configured to drive the lens 31 to tilt in any direction around, to implement image stabilization compensation for the camera module 30 when the electronic device shakes in any direction.

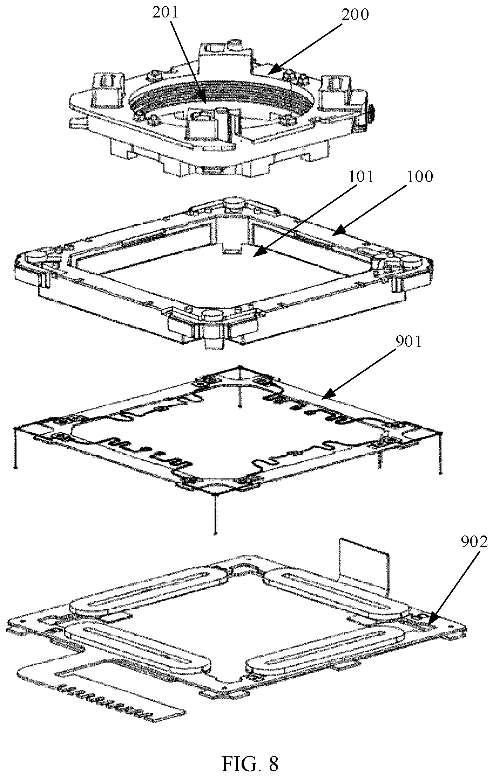

FIG. 7 is a three-dimensional view of a camera driving motor (with the casing 321 removed) according to an embodiment of this application, and FIG. 8 is an exploded view of the camera driving motor shown in FIG. 7. In FIG. 8, the structure shown in FIG. 7 is partially decomposed but not completely decomposed.

With reference to FIG. 7 and FIG. 8, in this embodiment, the camera driving motor includes a base 100 and a carrier 200. The base 100 shown in FIG. 7 and FIG. 8 may be disposed in the casing 321 of the camera driving motor 32 shown in FIG. 6, and the base 100 forms an accommodation cavity 101. The carrier 200 is disposed in the accommodation cavity 101, and the carrier 200 has a lens mounting hole 201. The lens mounting hole 201 is configured to assemble the lens 31 shown in FIG. 4 and FIG. 5.

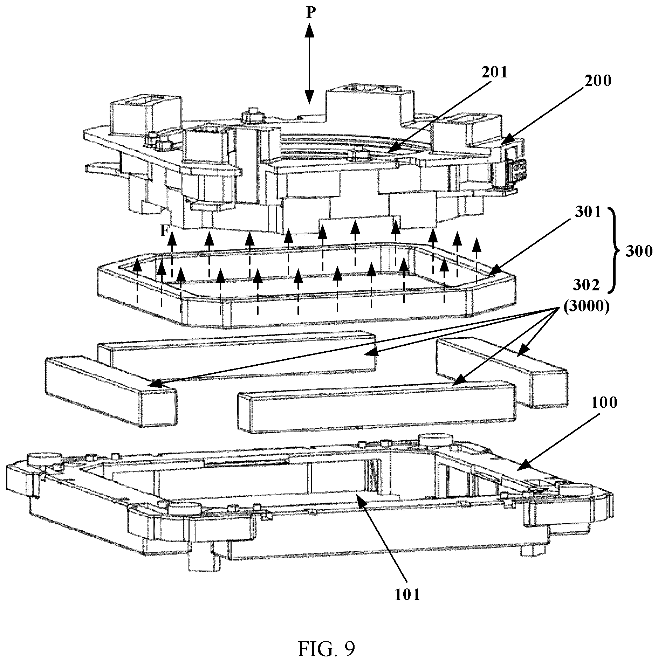

FIG. 9 shows further decomposition of a partial structure of the camera driving motor shown in FIG. 8. In addition to the base 100 and the carrier 200, the camera driving motor further includes a focusing structure 300. The focusing structure 300 is configured to drive the carrier 200 to move relative to the base 100 in an axial direction (a direction P) of the lens mounting hole 201, to drive the lens 31 in the lens mounting hole 201 to move in an extension direction of the optical axis o of the lens, to form an automatic focusing camera module.

That is, it may be understood that the base 100 provided in the embodiment in FIG. 9 of this application is a fixed part, the carrier 200 is a movable part, and the lens 31 is fixedly connected to the movable carrier 200. Under driving of the focusing structure 300, when the movable part moves in the direction P relative to the fixed part, the lens 31 may be simultaneously driven to move in the direction P, to implement automatic focusing.

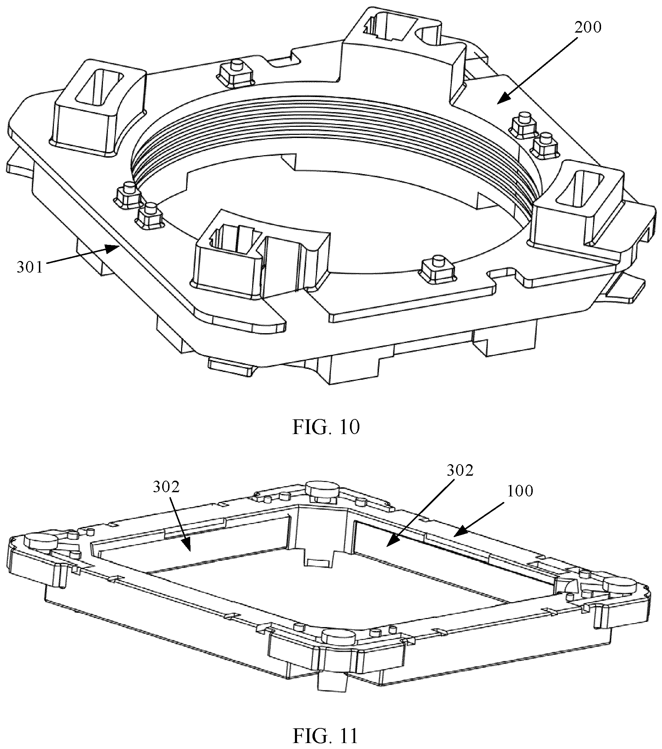

Still with reference to FIG. 9, the focusing structure 300 includes a first coil 301 and a magnet assembly 3000. The magnet assembly 3000 includes a plurality of first magnets 302. One of the first coil 301 and the magnet assembly 3000 is fastened to the base 100, and the other is fastened to the carrier 200. For example, in the structures shown in FIG. 10 and FIG. 11, the first coil 301 is fastened to the carrier 200, and the plurality of first magnets 302 are fastened to the base 100.

Still with reference to FIG. 9, the first coil 301 continuously surrounds a circumference of one of the base 100 and the carrier 200, and the plurality of first magnets 302 are arranged at an interval along a circumference of the other of the base 100 and the carrier 200. For example, the first coil 301 is fastened to the carrier 200, and is continuously disposed around a circumference of the carrier 200, four first magnets 302 are fastened to the base 100, and the four first magnets 302 are arranged at an interval along a circumference of the base 100.

In some other examples, the magnet assembly 3000 may alternatively be a first magnet 302 of an annular structure, and the first magnet 302 of the annular structure surrounds a periphery of the first coil 301 of the annular structure.

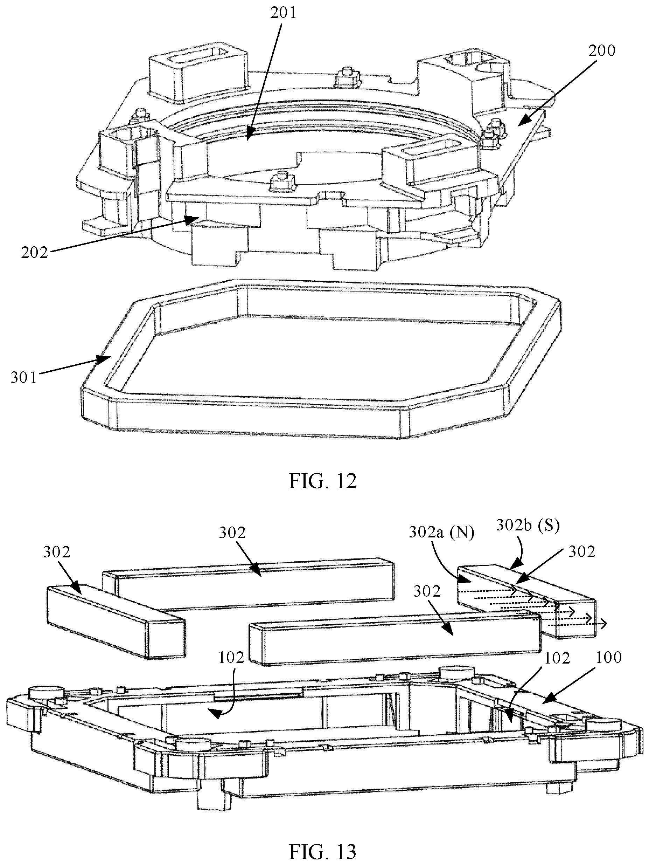

There are a plurality of manners of disposing the first coil 301 on the carrier 200. For example, in an example in FIG. 12, FIG. 12 is an exploded view of the carrier 200 and the first coil 301. A first mounting groove 202 is disposed on a wall surface that is of the carrier 200 and that faces the base 100, the first mounting groove 202 is disposed around the circumference of the carrier 200, and the first coil 301 of the annular structure is disposed in the first mounting groove 202.

FIG. 13 shows an example of a manner of arranging the first magnet 302. FIG. 13 is an exploded view of the base 100 and the first magnet 302. That is, a plurality of second mounting grooves 102 are disposed on a wall surface that is of the base 100 and that faces the carrier 200. The plurality of second mounting grooves 102 are arranged at an interval along the circumference of the base 100. One first magnet 302 may be disposed in one second mounting groove 102.

There needs to be electromagnetic induction between the first coil 301 and the first magnet 302. In this case, in a radial direction of the first coil 301 of the annular structure, an orthographic projection of the first magnet 302 on the first coil 301 overlaps at least a part of the first coil 301.

Because a coil that is provided in this embodiment of this application and that fits with the first magnet 302 is the first coil 301 of the annular structure, through the electromagnetic induction between the first coil 301 of the annular structure and the first magnet 302, an Ampere's force (for example, an Ampere's force F shown in FIG. 9) acting on the carrier 200 is basically evenly distributed along the circumference of the carrier 200. Compared with some technologies in which there is an Ampere's force in some regions and there is no Ampere's force in some regions along the circumference of the carrier 200, this example of this application can significantly increase an effective output force. Therefore, during focusing of the lens, a focusing speed can be increased.

In this embodiment of this application, as shown in FIG. 13, the first magnet 302 has a first part 302a facing the first coil 301 and a second part 302b that faces away from the first coil 301 and that is opposite to the first part 302a. The first part 302a and the second part 302b are magnetically opposite. For example, the first part 302a is an N pole, and the second part 302b is an S pole. That is, a magnetization direction (shown by a dashed line with an arrow shown in FIG. 13) of the first magnet 302 is perpendicular to a direction of the optical axis of the lens. Such a first magnet 302 may be referred to as a single-sided single-pole magnet, that is, one side has only one polarity.

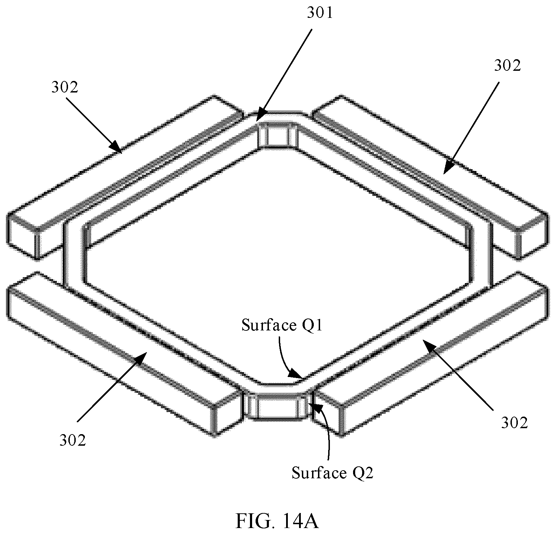

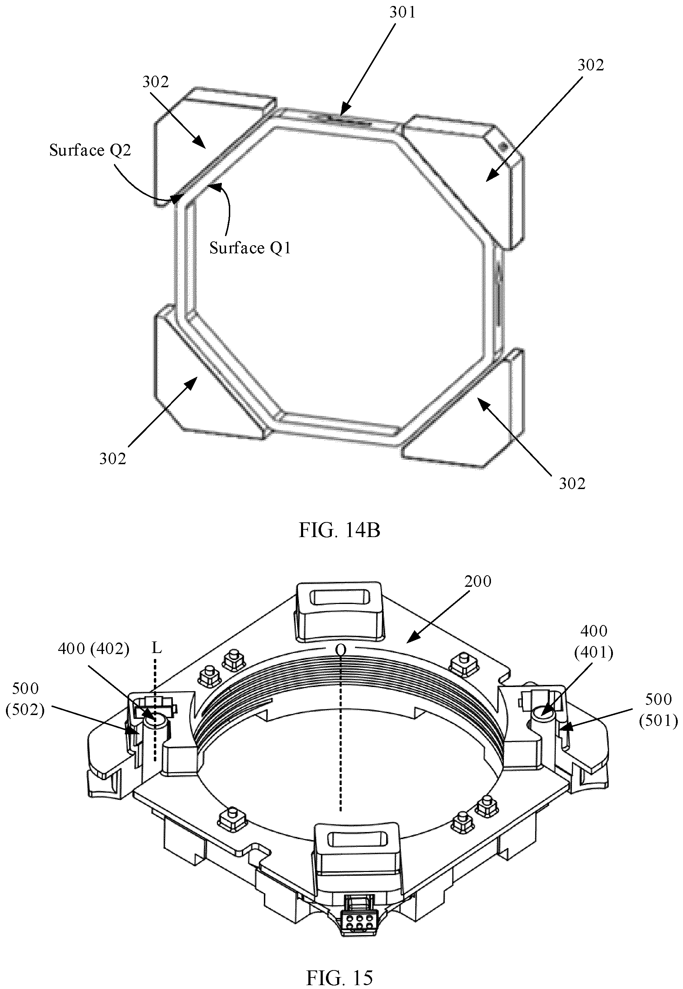

FIG. 14A and FIG. 14B respectively show two different structures of the first coil 301 and the first magnet 302. In each of the structures shown in FIG. 14A and FIG. 14B, the first coil 301 is of a hexagon structure. In FIG. 14A, side lengths of six sides of the hexagon include a long side and a short side, and the first magnet 302 is disposed opposite to the long side. In FIG. 14B, side lengths of six sides of the hexagon are basically equal, and one first magnet 302 is disposed opposite to one side.

FIG. 14A and FIG. 14B merely show some embodiments of the first coil 301 and the first magnet 302. This application includes the examples shown in FIG. 14A and FIG. 14B, but is not limited to these examples.

Regardless of in FIG. 14A or FIG. 14B, the first coil 301 has an inner annular surface Q1 and an outer annular surface Q2 that are opposite to each other. The inner annular surface Q1 is closer to a center of the first coil 301 than the outer annular surface Q2. The plurality of first magnets 302 are distributed at an interval along the periphery of the first coil 301, and each of the first magnets 302 faces the outer annular surface Q2.

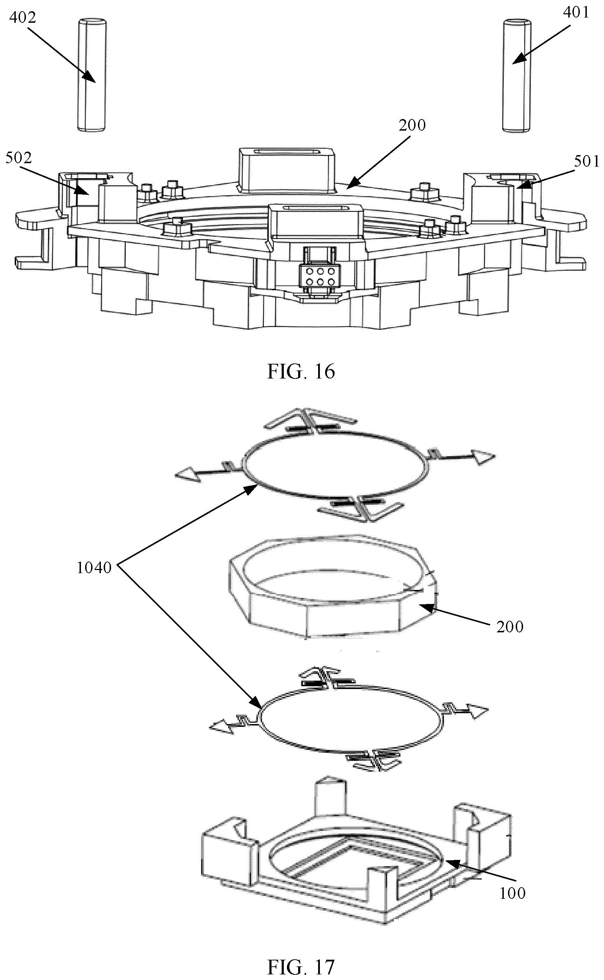

Refer to FIG. 15 and FIG. 16. FIG. 16 is an exploded view of FIG. 15. With reference to FIG. 15 and FIG. 16, the camera driving motor further includes a guide axis 400. An axial direction (for example, a direction L in FIG. 15) of the guide axis 400 is consistent with the direction of the optical axis o of the lens. The guide axis 400 is fastened relative to the base 100, and the carrier 200 is slidably connected to the guide axis 400. In addition, when the focusing structure 300 drives the carrier 200 to move relative to the base 100 along the optical axis o of the lens, the carrier 200 slides in the axial direction of the guide axis 400.

That is, when the carrier 200 carrying the lens moves along the optical axis o of the lens under action of the Ampere's force F, the guide axis 400 is used as a guide structure, and the carrier 200 slides in an extension direction of the guide axis 400.

In some embodiments, as shown in FIG. 17, the carrier 200 is connected to the base 100 through an elastic component 1040. When the carrier 200 moves relative to the base 100 for focusing under the action of the Ampere's force, the carrier 200 carrying the lens may experience a significant moving tilt (moving tilt) under traction of the elastic component 1040. In particular, when the lens or the image sensor is large, a movement offset angle is larger, or when the carrier 200 moves at a high speed, a movement offset angle is large. In this way, shooting clarity is severely affected, and use performance of the camera module is degraded.

However, when the structure of the camera driving motor shown in FIG. 15 and FIG. 16 provided in embodiments of this application is used, because the carrier 200 and the guide axis 400 slidably fit with each other, even if the lens or the image sensor is large, or the carrier 200 moves at a high speed relative to the base 100, the lens basically does not tilt at a large angle.

Therefore, according to the camera driving motor provided in this embodiment of this application, an effective output force on the lens can be increased, a focusing speed can be increased, and focusing stability can be improved.

FIG. 15 shows an example of a manner of disposing the guide axis 400. In the direction of the optical axis o of the lens, a guide groove 500 that penetrates through the carrier 200 is disposed on the carrier 200, and the guide axis 400 is slidably disposed in the guide groove 500.

To further increase a relative movement speed between the guide axis 400 and the guide groove 500, in some implementations, a lubrication structure may be disposed in the guide groove 500. For example, the guide groove 500 may be filled with lubricant. For another example, a film layer structure with a small friction coefficient may be formed on an inner wall surface of the guide groove 500.

When the carrier 200 carrying the lens moves relative to the base 100 to implement automatic focusing, to improve stability of sliding of the carrier 200 relative to the guide axis 400, a plurality of guide axes 400 may be disposed in the camera driving motor. For example, in the examples in FIG. 15 and FIG. 16, a guide axis 401 and a guide axis 402 are disposed. The guide axis 401 and the guide axis 402 may be arranged at an interval along the circumference of the carrier 200. The guide axis 401 is slidably disposed in a guide groove 501, and the guide axis 402 is slidably disposed in a guide groove 502.

In some examples, more guide axes 400 may alternatively be disposed. The plurality of guide axes 400 may be evenly distributed along the circumference of the carrier 200. The plurality of guide axes 400 may alternatively be disposed symmetrically with respect to the optical axis of the lens, so that the lens moves more smoothly during focusing.

Because a size of the camera driving motor provided in this embodiment of this application is small, some assembly processes further need to be considered while a use performance requirement is met. For example, a radial size of the guide axis 400 may range from 1 mm to 3 mm. When the guide axis 400 and the guide groove 500 are assembled, an assembly tolerance needs to be considered.

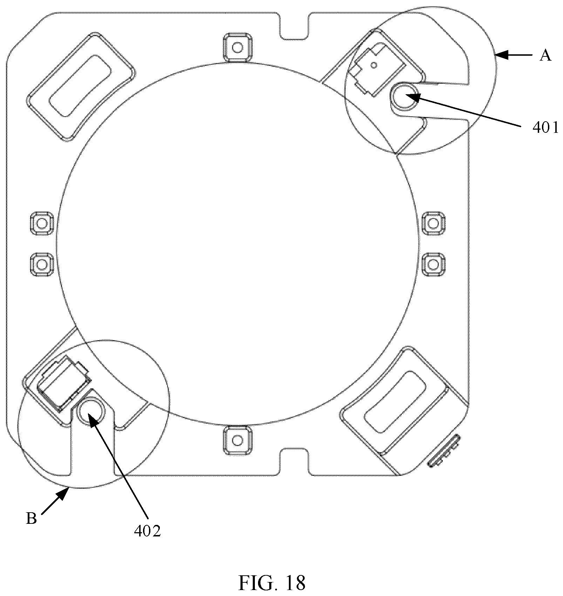

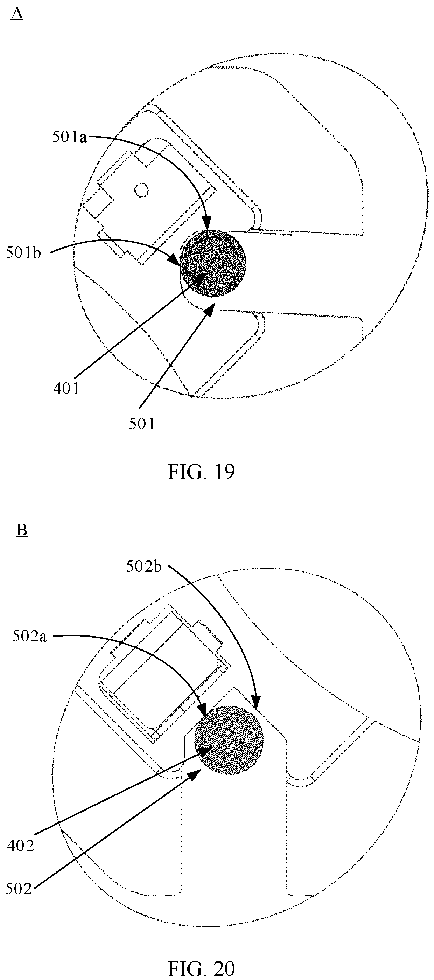

For example, FIG. 18 is a top view of FIG. 15, FIG. 19 is an enlarged view at A in FIG. 18, and shows an assembly relationship between the guide axis 401 and the guide groove 501, and FIG. 20 is an enlarged view at B in FIG. 18, and shows an assembly relationship between the guide axis 402 and the guide groove 502.

As shown in FIG. 19, the guide groove 501 has a first surface 501a and a second surface 501b that intersect, and the guide axis 401 abuts against (or is in contact with) both the first surface 501a and the second surface 501b. As shown in FIG. 20, the guide groove 502 has a third surface 502a and a fourth surface 502b that are adjacent to each other, and the guide axis 402 abuts against the third surface 502a, and has a gap with the fourth surface 502b.

Based on the designs in FIG. 19 and FIG. 20, the guide axis 401 abuts against the first surface 501a and abuts against the second surface 501b, to achieve a positioning function for movement of the guide axis 401, and ensure that the carrier 200 moves in a straight line in an axial direction of the guide axis 401. In addition, the guide axis 402 abuts against the third surface 502a, to achieve a positioning function for movement of the guide axis 401, and the guide axis 402 fits with the fourth surface 502b through a gap, to achieve an assembly tolerance function. In this way, the carrier can smoothly pass through the guide axis in an assembly process.

The guide groove has a plurality of shapes. For example, in FIG. 19, a cross section of the guide groove 501 is of a U-shaped structure, and in FIG. 20, a cross section of the guide groove 502 is of a V-shaped structure. Alternatively, the cross section of the guide groove 501 may be of another structure.

The cross section of the guide groove described above may be understood as a cross section that is of the guide groove and that is perpendicular to the axial direction.

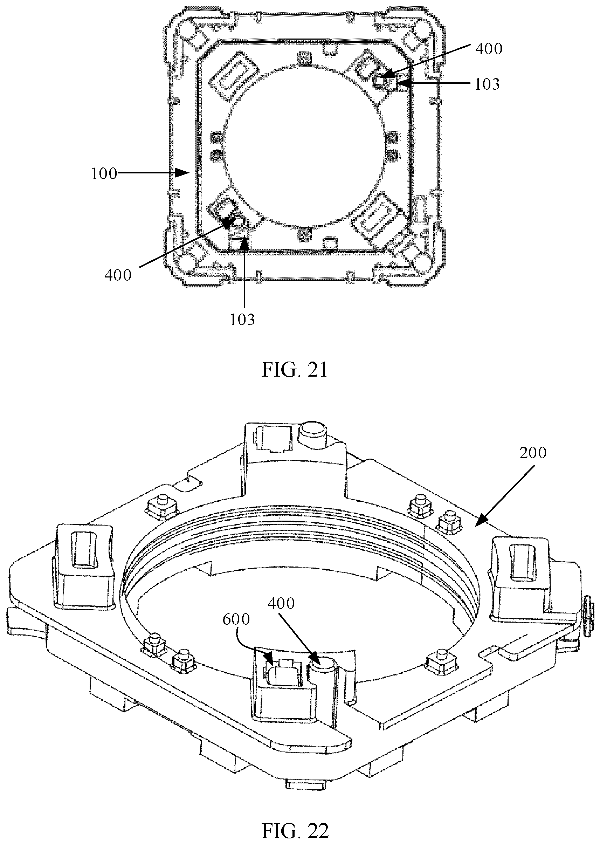

In the foregoing example, the guide axis 400 and the base 100 are fastened relative to each other, and there are a plurality of examples of fastening manners. For example, FIG. 21 is a top view of the base, that is, a view from the light entrance end of the lens to the light exit end. A fastening portion 103 may be extended on a side surface that is of the base 100 and that is close to the light entrance end of the lens, and the guide axis 400 is fastened to the fastening portion 103. For example, the guide axis may be fastened to the fastening portion 103 through a buckle structure.

During automatic focusing of the lens, to further enable the carrier 200 carrying the lens to move in a straight line relative to the base 100 in a direction parallel to the optical axis of the lens, in this embodiment of this application, as shown in FIG. 22, an attraction structure 600 is further added. The attraction structure 600 may generate an attractive force between the carrier 200 and the base 100, may generate an attractive force between the carrier 200 and the guide axis 400, or may generate an attractive force between the carrier 200 and the base 100, and may generate an attractive force between the carrier 200 and the guide axis 400. The attractive force has a component force perpendicular to the optical axis of the lens.

In this case, when the focusing structure 300 drives the carrier 200 to move relative to the base 100 along the optical axis of the lens, the carrier 200 can slide in a straight line in the axial direction of the guide axis 400 under attraction of the attractive force.

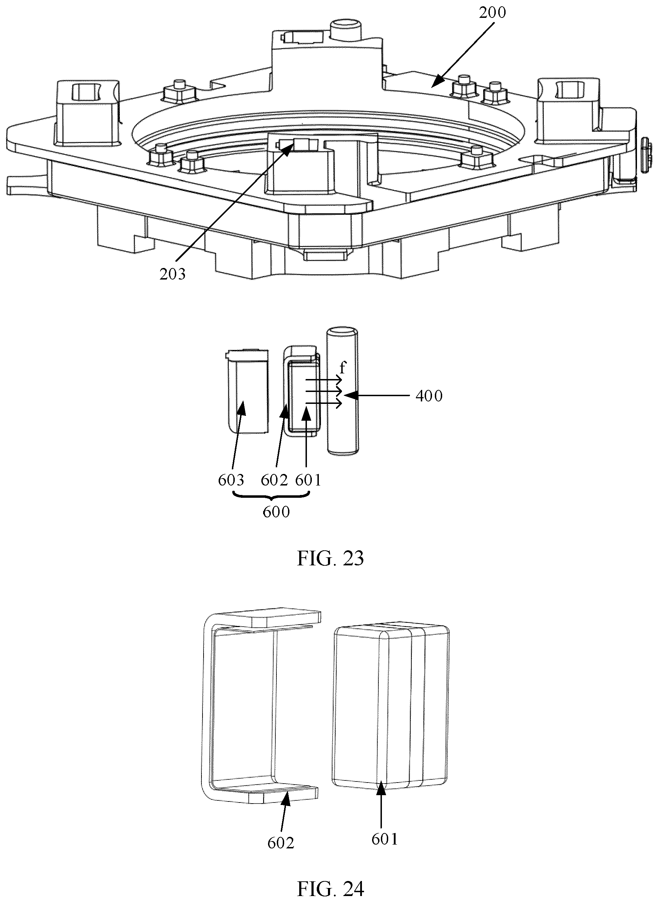

In some examples, FIG. 23 is an exploded view of FIG. 22. The attraction structure 600 may include a second magnet 601. The second magnet 601 is fastened relative to the carrier 200, and the second magnet 601 is disposed close to the guide axis 400. For example, the guide axis 400 may be a magnetic metal structural member, and an attractive force f is generated between the second magnet 601 and the guide axis 400. The attractive force f is used to enable the carrier 200 to hold the guide axis 400 tightly in a moving process and slide in the axial direction of the guide axis 400. Alternatively, the guide axis 400 may be a non-magnetic structural member, for example, a ceramic, and a magnetic material may be formed on an outer wall surface of the ceramic.

In some other examples, the attraction structure 600 may include a first lodestone fastened to the carrier 200 and a second lodestone fastened to the base. A magnetic attractive force may be generated between the first lodestone and the second lodestone. The magnetic attractive force has a component force perpendicular to the guide axis. The component force is used to enable the carrier to hold the guide axis tightly and slide smoothly.

Still with reference to FIG. 23, when a manner in which the second magnet 601 holds the guide axis 400 tightly is used, a mounting cavity 203 may be disposed at a position that is of the carrier 200 and that is located on a side of the guide axis 400, and the second magnet 601 is disposed in the mounting cavity 203.

In the camera driving motor provided in this embodiment of this application, electromagnetic induction is generated between the first coil 301 and the first magnet 302 in the focusing structure 300. In addition, as shown in FIG. 23, a magnetic attractive force is generated between the second magnet 601 in the attraction structure 600 and the guide axis 400.

To avoid mutual impact of the electromagnetic induction between the first coil 301 and the first magnet 302 and an electromagnetic force between the second magnet 601 and the guide axis 400, as shown in FIG. 23 and FIG. 24, FIG. 24 is an exploded view of an electromagnetic shielding body 602 and the second magnet 601. The second magnet 601 may be disposed in the electromagnetic shielding body 602. For example, the electromagnetic shielding body 602 may be disposed in the mounting cavity 203. In addition, there is placement space in the electromagnetic shielding body 602, the second magnet 601 is located in the placement space, and a side surface that is of the electromagnetic shielding body 602 and that faces the guide axis 400 is open, so that the attractive force is generated between the second magnet 601 and the guide axis 400.

In some examples, except that the side surface that is of the electromagnetic shielding body 602 and that faces the guide axis 400 is open, all other side surfaces may be closed.

In some other examples, still with reference to FIG. 24, in addition to the side surface that is of the electromagnetic shielding body 602 and that faces the guide axis 400, a first side surface that is of the electromagnetic shielding body 602 and that faces the lens mounting hole 201 is also open, and a surface that is of the electromagnetic shielding body 602 and that is opposite to the first side surface is also open. In some structures, the second magnet 601 is far away from the first coil 301 and the first magnet 302. Therefore, the structure of the electromagnetic shielding body 602 shown in FIG. 24 may be used.

Still as shown in FIG. 23, the electromagnetic shielding body 602 may be disposed in the mounting cavity 203, and may be fastened in the mounting cavity 203 through a bonding layer 603.

In addition, to increase a holding force of the carrier 200 on the guide axis 400, the open surface that is of the electromagnetic shielding body 602 and that faces the guide axis 400 is opposite to an abutting surface between the guide axis 400 and the guide groove 500. In this way, a clamping force between the guide axis 400 and the carrier 200 can be increased, to further reduce a tilt offset of the lens during automatic focusing.

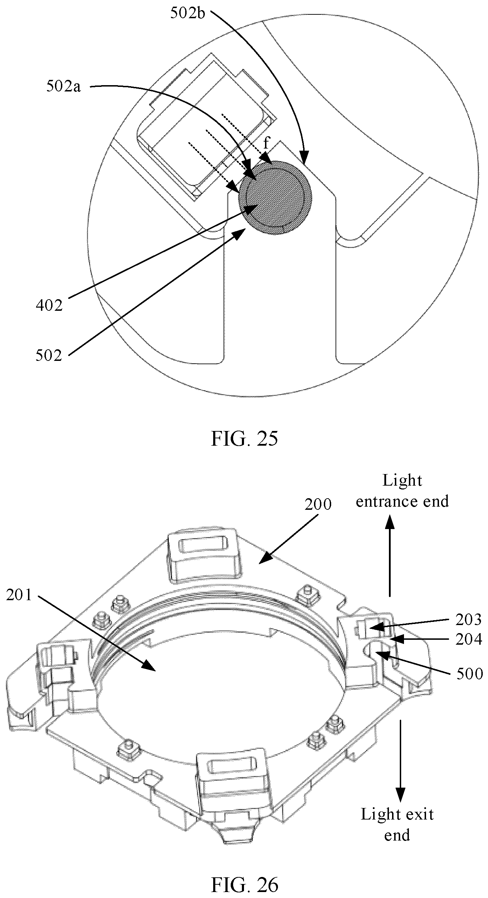

In addition, in some examples, during automatic focusing of the lens, to enable the carrier to hold the guide axis tightly, as shown in FIG. 25, the second guide axis 402 abuts against the third surface 502a, and an attractive force between the second magnet and the second guide axis 402 includes a component force perpendicular to the third surface 502a. In this way, the force perpendicular to the third surface 502a can be used to improve holding strength between the guide axis and the carrier, to further improve focusing stability.

FIG. 26 is a three-dimensional view of the carrier 200. There is a protruding limiting boss 204 on a side that is of the carrier 200 and that faces the light entrance end of the lens. When the carrier 200 carrying the lens moves relative to the base 100 to implement automatic focusing, the limiting boss 204 may abut against the casing 321, to achieve a limiting function.

In some implementable structures, the guide groove 500 may be disposed at a position at which there is the limiting boss 204, that is, the guide groove 500 penetrates through the carrier 200 and the limiting boss 204, to increase an axial length of the guide groove 500 and increase an axial length of the guide axis 400. In this way, a contact area between the guide axis 400 and the guide groove 500 can be increased, to further improve stability of automatic focusing of the lens.

The mounting cavity 203 configured to mount the electromagnetic shielding body 602 may also be disposed on the limiting boss 204. In this way, space of the limiting boss 204 is fully used, so that the entire structure is more compact.

According to the camera driving motor in this embodiment of this application, automatic focusing of the lens can be implemented, and optical image stabilization can be implemented.

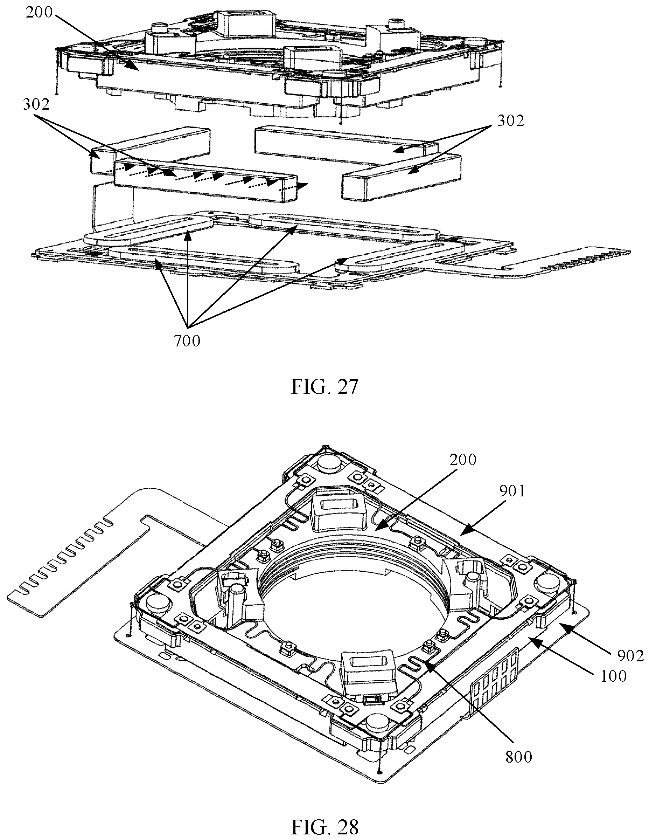

FIG. 27 is a partial exploded view of a structure of a camera driving motor according to an embodiment of this application. The camera driving motor further includes a second coil 700. The second coil 700 is disposed opposite to the first magnet 302. The second coil 700 and the first magnet 302 form an image stabilization structure. The image stabilization structure is configured to drive the carrier 200 carrying the lens and the base 100 to tilt in any direction around, to implement optical image stabilization.

That the second coil 700 is disposed opposite to the first magnet 302 may be understood as follows: In the direction of the optical axis o of the lens, an orthographic projection of the first magnet 302 on the second coil 700 overlaps at least a part of the second coil 700.

In the first coil 301 and the first magnet 302 that are configured to implement automatic focusing, the first magnet 302 faces an outer wall surface of the first coil 301; and the second coil 700 and the first magnet 302 that are configured to implement optical image stabilization are arranged in the direction of the optical axis o of the lens. That is, an arrangement direction of the first coil 301 and the first magnet 302 is perpendicular to an arrangement direction of the second coil 700 and the first magnet 302, so that the first magnet 302 is shared by automatic focusing and optical image stabilization.

There may be a plurality of second coils 700, and the plurality of second coils 700 are disposed one-to-one with the plurality of first magnets 302. That is, one second coil 700 may be disposed opposite to one first magnet 302, and the second coil 700 and the corresponding first magnet 302 are arranged in a direction consistent with the direction of the optical axis of the lens.

In some other examples, one second coil 700 may be disposed opposite to a plurality of first magnets 302, or a plurality of second coils 700 may be disposed opposite to one first magnet 302.

In the camera driving motor provided in this embodiment of this application, the first coil 301 and the first magnet 302 form a focusing structure for automatic focusing, and the first magnet 302 and the second coil 700 form an image stabilization structure for image stabilization. That is, the focusing structure and the focusing structure share the first magnet 302. In this way, a structural member of the driving motor can be simplified, and a volume of the entire driving motor can be compressed.

In this embodiment of this application, as shown in FIG. 27, the second coil 700 is a racetrack coil, and the racetrack coil is arranged in a magnetization direction (a dashed line with an arrow in FIG. 27) of the first magnet 302. Certainly, a coil of another structure may alternatively be used.

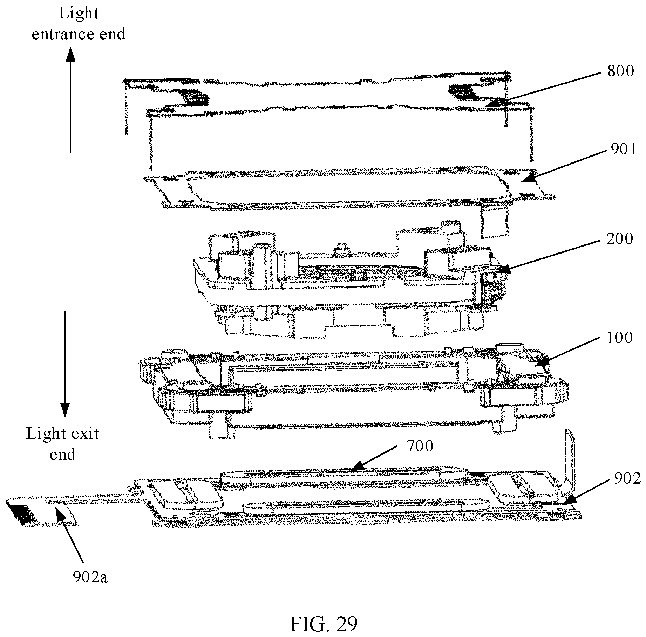

During automatic focusing, the camera driving motor needs to supply power to the first coil 301. FIG. 28 is an assembly diagram of the camera driving motor, and FIG. 29 is an exploded view of FIG. 28. The camera driving motor further includes an electrical connection structure 800. Apart of the electrical connection structure 800 is electrically connected to the first coil 301, and another part is electrically connected to a circuit board of the camera driving motor, so that the circuit board supplies power to the first coil 301 through the electrical connection structure 800.

Because the carrier 200 carrying the first coil 301 needs to move in the direction of the optical axis of the lens, the electrical connection structure 800 may be a flexible structure.

Still with reference to FIG. 28 and FIG. 29, an embodiment of this application further includes a first sub-circuit board 901 and a second sub-circuit board 902. For example, the first sub-circuit board 901 and the second sub-circuit board 902 each may be a flexible printed circuit (flexible printed circuit, FPC). Some electronic components may be integrated into the first sub-circuit board 901, for example, a position detection unit configured to detect movement of the lens or some other functional chips. The second sub-circuit board 902 may be electrically connected to a computing control unit disposed outside the camera driving motor, or electrically connected to a power supply unit configured to supply power to the first coil 301.

The first sub-circuit board 901 is disposed on a side that is of the base 100 and that faces the light entrance end of the lens, and the second sub-circuit board 902 is disposed on a side that is of the base 100 and that faces away from the light entrance end of the lens. As shown in FIG. 29, the second coil 700 may be disposed on the second sub-circuit board 902.

With reference to FIG. 28 and FIG. 29, it may be understood that the carrier 200 is nested in the base 100, the first sub-circuit board 901 is disposed on the side that is of the base 100 and that faces the light entrance end, the second sub-circuit board 902 is disposed on the side that is of the base 100 and that faces away from the light entrance end, and the second sub-circuit board 902 may be electrically connected to the external computing control unit or power supply unit through a connection end 902a shown in FIG. 29.

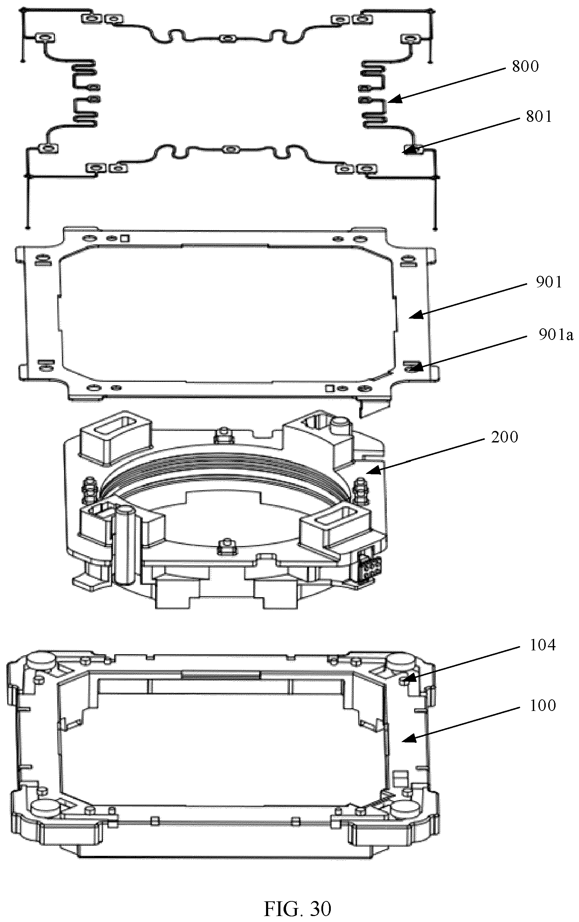

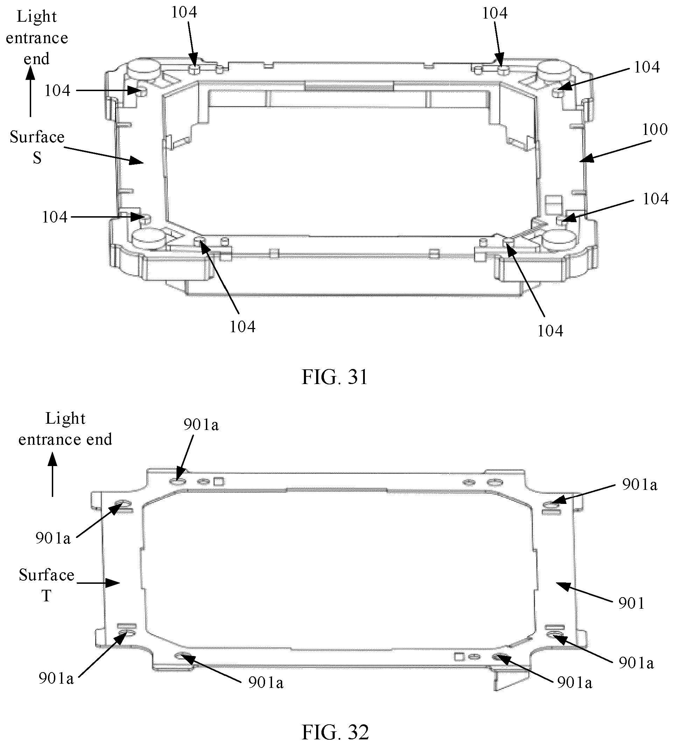

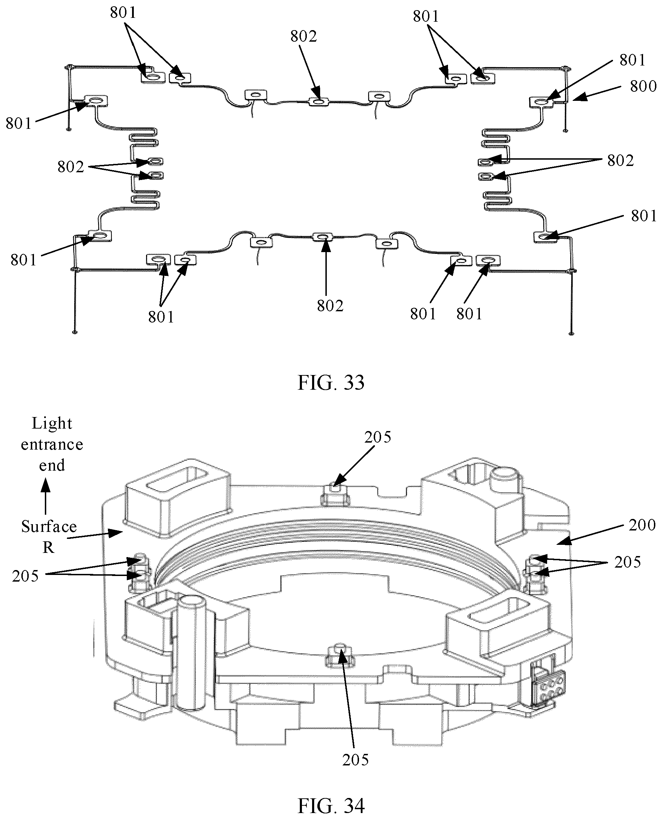

FIG. 30 is an exploded view of an electrical connection structure 800, a first sub-circuit board 901, a carrier 200, and a base 100 according to an embodiment of this application, FIG. 31 is a three-dimensional view of the base 100, FIG. 32 is a three-dimensional view of the first sub-circuit board 901, FIG. 33 is a three-dimensional view of the electrical connection structure 800, and FIG. 34 is a three-dimensional view of the carrier 200.

As shown in FIG. 30 and FIG. 32, the base 100 has a surface S facing the light entrance end, and the first sub-circuit board 901 is fastened to the surface S. For example, as shown in FIG. 31, a plurality of first fastening posts 104 may be disposed on the surface S, and the plurality of first fastening posts 104 are disposed at an interval along the circumference of the base 100. Correspondingly, as shown in FIG. 32, a plurality of mounting holes 901a may be disposed on the first sub-circuit board 901, and the first fastening post 104 is inserted into the mounting hole 901a, to implement relative fastening of the first sub-circuit board 901 and the base 100. Certainly, another fastening manner, for example, an adhesive layer or a connection screw, may alternatively be used.

As shown in FIG. 32, the first sub-circuit board 901 has a surface T facing the light entrance end, and the electrical connection structure 800 in FIG. 33 is disposed on the surface T. As shown in FIG. 33, the electrical connection structure 800 includes a first fastening end 801, and the first fastening end 801 may be fastened to the first fastening post 104 that passes through the mounting hole 901a, to implement fastening among the base 100, the first sub-circuit board 901, and the electrical connection structure 800.

As shown in FIG. 34, the carrier 200 has a surface R facing the light entrance end, and a plurality of second fastening posts 205 may be disposed on the surface R. In addition, as shown in FIG. 33, the electrical connection structure 800 may further include a second fastening end 802, and the second fastening end 802 may be fastened to the second fastening post 205, to implement fastening between the carrier 200 and the electrical connection structure 800.

In this embodiment of this application, the first sub-circuit board 901 is fastened to the base 100, and the first sub-circuit board 901 is connected to the carrier 200 through the flexible electrical connection structure 800. Therefore, under action of electromagnetic induction between the second coil 700 and the first magnet 302, when the base 100 tilts in any direction around to implement image stabilization compensation, the flexible electrical connection structure 800 can connect the carrier 200 and the base 100 as a whole, to drive the carrier 200 to tilt with the base 100. In this way, simultaneous image stabilization driving of the lens and the image sensor can be implemented.

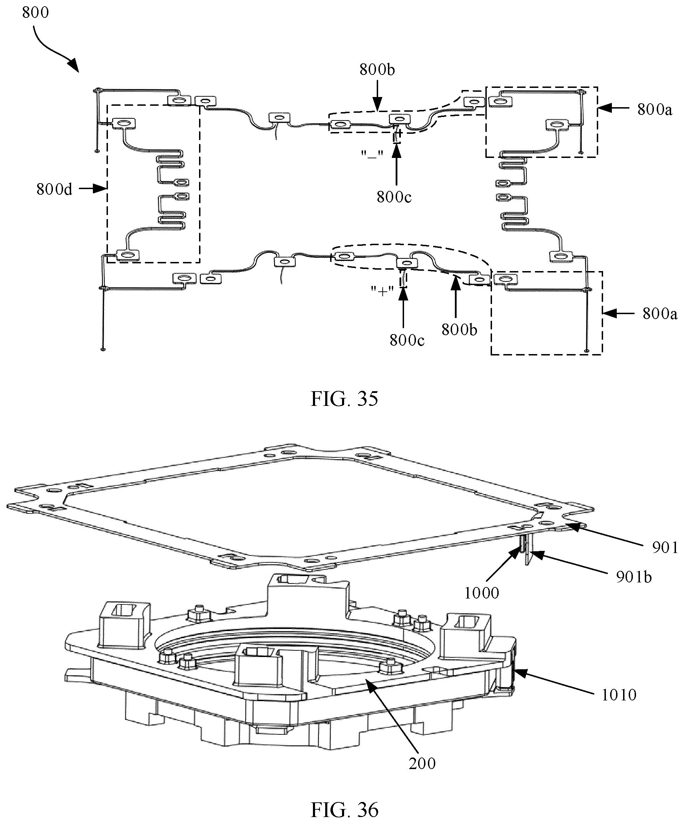

With reference to FIG. 35, the following further describes in detail the electrical connection structure 800 in this embodiment of this application.

As shown in FIG. 35, the electrical connection structure 800 may include a first part 800a, a second part 800b, and a third part 800c.

The second sub-circuit board 902 and the first sub-circuit board 901 may be connected through the first part 800a, that is, one end of the first part 800a is connected to the second sub-circuit board 902, and the other end is connected to the first sub-circuit board 901. The first part 800a may be disposed at corners of the first sub-circuit board 901 and the second sub-circuit board 902, to fully use corner space.

The first sub-circuit board 901 is connected to the carrier 200 through the second part 800b, that is, one end of the second part 800b is connected to the first sub-circuit board 901, and the other end is connected to the carrier 200.

The first coil 301 is connected to the second part 800b on the carrier 200 through the third part 800c, that is, one end of the third part 800c is connected to the second part 800b on the carrier 200, and the other end is connected to the first coil 301.

In some examples, the first coil 301 in the focusing structure 300 may include a positive pole and a negative pole. One of two third parts 800c in FIG. 35 is electrically connected to the positive pole (+) of the first coil 301, and the other is electrically connected to the negative pole (-) of the first coil 301.

In addition, as shown in FIG. 35, the electrical connection structure 800 further includes a fourth part 800d. In some examples, in addition to the optical element, the lens further includes a drive unit configured to adjust an aperture size. The fourth part 800d may be electrically connected to the drive unit configured to adjust the aperture size.

In some related technologies, still with reference to FIG. 17, the carrier 200 is connected to the base 100 through the elastic component 1040. The elastic component 1040 is not only used as a support member that supports the carrier 200 on the base 100, but also used as a conductive member that supplies power to the focusing coil. Due to a limitation of an output force (Ampere's force under which the focusing structure drives the carrier to move), selection of the elastic component is limited. For example, when the output force is large, an elastic component with a large stiffness coefficient K needs to be selected. However, when the stiffness coefficient K of the elastic component is large, a focusing speed of the lens is affected, and a focusing response speed cannot be increased.

However, in the camera driving motor provided in this embodiment of this application, the carrier 200 moves relative to the base 100 and slides under guidance of the guide axis, and the electrical connection structure 800 in this embodiment does not need to support the carrier 200, and has only a conductive function. Therefore, selection of a stiffness coefficient K of the electrical connection structure 800 is basically not affected by a focusing output force of the carrier. Therefore, in an implementable structure, an elastic component with a small stiffness coefficient K may be selected as the electrical connection structure 800. In this way, a focusing speed of the lens is basically not affected.

For example, for the stiffness coefficient K of the electrical connection structure 800, K≤10 N/m, K≤8 N/m, or K≤5 N/m may be selected.

In some examples, FIG. 36 is an exploded view of the carrier 200 and the first sub-circuit board 901. A position detection unit 1000 may be disposed on the first sub-circuit board 901, and the position detection unit 1000 is configured to detect a position at which the carrier 200 slides relative to the guide axis 400.

For example, the position detection unit 1000 may be an electromagnetic transducer (electromagnetic transducer). When the carrier 200 carrying the lens moves relative to the base 100 for focusing, the electromagnetic transducer is used to sense a magnetic flux change, to convert the magnetic flux change into an output signal change, so as to determine a position of the lens during focusing.

FIG. 36 shows a manner of arranging the position detection unit 1000. The first sub-circuit board 901 has a bent portion 901b, the bent portion 901b is bent to a gap between the carrier 200 and the base 100, and the position detection unit 1000 is disposed on the bent portion 901b. In addition, a detection magnet 1010 is disposed at a position opposite to the position detection unit 1000, and the detection magnet 1010 is disposed on the carrier 200. In this case, when the carrier 200 assembled with the lens and the detection magnet 1010 moves in the direction of the optical axis of the lens to implement automatic focusing, the position detection unit 1000 senses a magnetic flux change of the detection magnet 1010, and determines a focusing position of the lens.

In this embodiment of this application, because there are a plurality of first magnets 302 in the focusing structure 300, and the plurality of first magnets 302 are arranged at an interval along the circumference of the base 100, the position detection unit 1000 may be disposed in a gap between two adjacent first magnets 302.

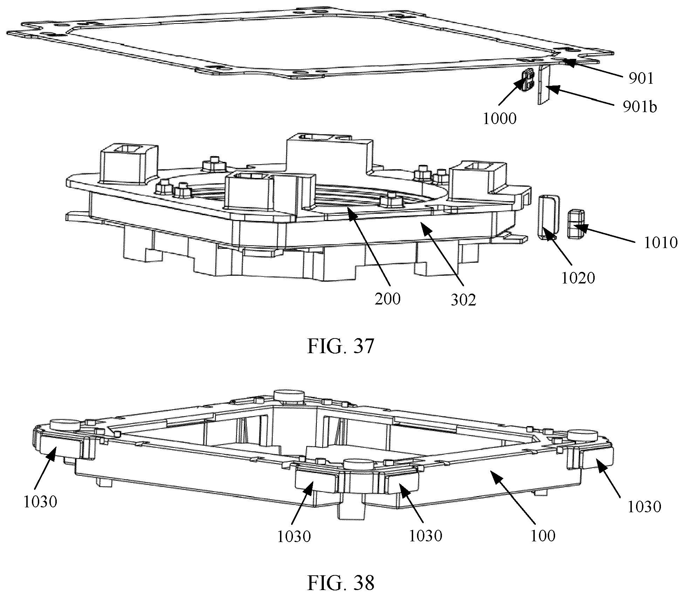

FIG. 37 is an exploded view of FIG. 36. Because the detection magnet 1010 is disposed on the carrier 200, and the first magnet 302 in the focusing structure 300 is also disposed on the carrier 200, to avoid electromagnetic interference between the detection magnet 1010 and the first magnet 302, an electromagnetic shielding structure 1020 may be disposed, and the detection magnet 1010 is disposed in space of the electromagnetic shielding structure 1020. In addition, a surface that is of the electromagnetic shielding structure 1020 and that faces the position detection unit 1000 is open, so that the position detection unit 1000 can sense a magnetic flux change.

When the carrier 200 carrying the lens and the base 100 are driven to tilt in any direction around to implement optical image stabilization, to avoid rigid contact between the base 100 and a casing covering the base 100, as shown in FIG. 38, an elastic buffer component 1030 is disposed on an outer wall surface of the base 100. There may be a plurality of elastic buffer components 1030 that may be disposed at a corner of the base 100. The plurality of elastic buffer components 1030 may be disposed at an interval along the circumference of the base 100.

In the descriptions of this specification, the specific features, structures, materials, or characteristics may be combined in a proper manner in any one or more embodiments or examples.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera driving motor, comprising:
a base;
a carrier, wherein the carrier is configured to mount a lens;
a focusing structure, connecting the carrier and the base, wherein the focusing structure comprises a first coil and a magnet assembly, the magnet assembly comprises a plurality of first magnets, the first coil is of an annular structure, one of the first coil and the magnet assembly is disposed on the base, the other is disposed on the carrier, the first coil continuously surrounds a circumference of one of the base and the carrier, and the plurality of first magnets are distributed around a circumference of the other of the base and the carrier; and
a first guide axis, wherein an axial direction of the guide axis is consistent with a direction of an optical axis of the lens, the first guide axis is fastened relative to the base, the carrier is slidably connected to the first guide axis, and the carrier has a first surface and a second surface that slidably fit with the first guide axis, wherein
when the focusing structure drives the carrier to move relative to the base along the optical axis of the lens, the carrier slides in the axial direction of the first guide axis, and the first guide axis is in contact with the first surface and the second surface.

2. The camera driving motor according to claim 1, wherein the camera driving motor further comprises:
an attraction structure, configured to generate an attractive force between the carrier and the base and/or between the carrier and the first guide axis, wherein
when the focusing structure drives the carrier to move relative to the base along the optical axis of the lens, the carrier slides in the axial direction of the first guide axis under attraction of the attractive force.

3. The camera driving motor according to claim 2, wherein the attractive force comprises a force perpendicular to the first surface.

4. The camera driving motor according to claim 2 or 3, wherein the attraction structure comprises:
a second magnet, wherein the second magnet is fastened relative to the carrier, and is disposed close to the first guide axis, and the attractive force is generated between the second magnet and the first guide axis.

5. The camera driving motor according to claim 4, wherein the attraction structure further comprises:
an electromagnetic shielding body, disposed on the carrier, wherein there is placement space in the electromagnetic shielding body, the second magnet is located in the placement space, and a side surface that is of the electromagnetic shielding body and that faces the first guide axis is open, so that the attractive force is generated between the second magnet and the first guide axis.

6. The camera driving motor according to claim 5, wherein a side surface that is of the electromagnetic shielding body and that faces each of the first surface and the second surface is open.

7. The camera driving motor according to any one of claims 4 to 6, wherein there is a limiting boss on a side that is of the carrier and that faces a light entrance end of the lens, and when the focusing structure drives the carrier to move relative to the base along the optical axis of the lens, the limiting boss is configured to limit a movement position of the carrier;
the first guide axis penetrates through the carrier and the limiting boss; and
there is a mounting cavity at a position that is of the limiting boss and that is located on a side of the first guide axis, and the second magnet is disposed in the mounting cavity.

8. The camera driving motor according to any one of claims 1 to 7, wherein a first guide groove is disposed on the carrier, an extension direction of the first guide groove is consistent with the direction of the optical axis of the lens, the first guide axis is slidably disposed in the first guide groove, the first surface and the second surface are inner wall surfaces of the first guide groove, and the first surface and the second surface intersect.

9. The camera driving motor according to claim 8, wherein a lubrication structure is disposed in the first guide groove.

10. The camera driving motor according to any one of claims 1 to 9, wherein the camera driving motor further comprises a second guide axis; and
the first guide axis and the second guide axis are symmetrically disposed with respect to the optical axis of the lens.

11. The camera driving motor according to claim 10, wherein the camera driving motor further comprises a second guide groove;
the second guide groove is slidably disposed in the second guide groove; and
the second guide groove has a third surface and a fourth surface that intersect, and when the focusing structure drives the carrier to move relative to the base along the optical axis of the lens, the second guide axis is in contact with the third surface, and there is a gap between the second guide axis and the fourth surface.

12. The camera driving motor according to any one of claims 1 to 11, wherein the first coil is disposed on the carrier, and the plurality of first magnets are disposed on the base;
the first coil has an inner annular surface and an outer annular surface that are opposite to each other; and
the plurality of first magnets are distributed at an interval along a periphery of the first coil, and each of the first magnets faces the outer annular surface.

13. The camera driving motor according to any one of claims 1 to 12, wherein
the camera driving motor further comprises:
a plurality of second coils, wherein the plurality of second coils are disposed one-to-one with the plurality of first magnets, each of the second coils and a corresponding first magnet are arranged in a direction consistent with the direction of the optical axis of the lens, and the plurality of second coils and the plurality of first magnets are configured to drive the base and the carrier to tilt in any direction around.

14. The camera driving motor according to claim 13, wherein
the first magnet has a first part facing the first coil and a second part that faces away from the first coil and that is opposite to the first surface, the first part and the second part are magnetically opposite, and a direction from the first part to the second part is a first direction; and
the second coil is a racetrack coil, and the second coil is parallel to the first direction.

15. The camera driving motor according to any one of claims 1 to 14, wherein the camera driving motor further comprises:
an electrical connection structure, wherein the electrical connection structure is a flexible structure, a part of the electrical connection structure is electrically connected to the first coil, another part is electrically connected to a circuit board of the camera driving motor, and the circuit board supplies power to the first coil through the electrical connection structure.

16. The camera driving motor according to claim 15, wherein the electrical connection structure is an elastic component, a stiffness coefficient of the elastic component is K, and K≤10 N/m.

17. The camera driving motor according to claim 15 or 16, wherein in the direction of the optical axis of the lens, the base has a first side close to the light entrance end of the lens and a second side away from the light entrance end of the lens;
the circuit board comprises:
a first sub-circuit board, wherein the first sub-circuit board is located on the first side; and
a second sub-circuit board, wherein the second sub-circuit board is located on the second side; and
the first sub-circuit board and the second sub-circuit board are electrically connected through a part of the electrical connection structure, and the first sub-circuit board and the first coil are electrically connected through another part of the electrical connection structure.

18. The camera driving motor according to claim 17, wherein
the first sub-circuit board is fastened to the base;
the electrical connection structure comprises:
a first part, a second part, and a third part;
the second sub-circuit board is connected to the first sub-circuit board through the first part;
the first sub-circuit board is connected to the carrier through the second part; and
the first coil is connected to the second part on the carrier through the third part.

19. The camera driving motor according to claim 17 or 18, wherein the camera driving motor further comprises:
a position detection unit, configured to detect a position at which the carrier slides relative to the first guide axis, wherein the position sensor is disposed on the first sub-circuit board.

20. The camera driving motor according to any one of claims 1 to 19, wherein
the base forms an accommodation cavity, the carrier is located in the accommodation cavity, and the carrier has a lens mounting hole configured to mount the lens;
there is a first mounting groove on a wall surface that is of the carrier and that faces the base, the first mounting groove surrounds the circumference of the carrier, and the first coil is disposed in the first mounting groove; and
there are a plurality of second mounting grooves on a wall surface that is of the base and that faces the carrier, the plurality of second mounting grooves are disposed at an interval along the circumference of the base, and the first magnet is disposed in the second mounting groove.

21. A camera module, comprising:
the camera driving motor according to any one of claims 1 to 20; and
a lens, wherein the lens is mounted on the carrier.

22. An electronic device, comprising:
the camera module according to claim 21; and
a computing control unit, wherein the computing control unit is electrically connected to the camera module.
